# EUROPEAN PATENT SPECIFICATION

(11) **EP 1 694 011 B1**
(45) Date of publication and mention of the grant of the patent: **21.05.2008**
(21) Application number: 06250841.1
(22) Date of filing: 16.02.2006
(51) Int. Cl.: H04L 12/56

(54) **Differentiating method and program for a user equipment of a mobile communication system**
Unterscheidungsverfahren und Programm für ein Teilnehmergerät eines Mobilkommunikationssystems
Méthode de différenciation et programme pour un équipement d'utilisateur d'un système de communication mobile

(30) Priority: 16.02.2005 JP 2005038553
(43) Date of publication of application: 23.08.2006
(73) Proprietor: NEC Corporation, Minato-ku Tokyo 108 (JP)
(72) Inventor: Kozuka, Hideki c/o NEC Corporation, Minato-ku, Tokyo 108 (JP)
(74) Representative: Moir, Michael Christopher

(56) References cited:
- EP-A- 1 286 564
- EP-A- 1 439 668
- US-A1- 2003 147 371
- US-A1- 2004 162 074

## Description

### BACKGROUND OF THE INVENTION

### Field of the Invention

The present invention relates to a mobile communication system, a radio network controller, and a user equipment differentiating method and program used for the same, and specifically to differentiation between user equipment (UE) compliant with Release5 and user equipment compliant with Release99 in the IMT-2000 (International Mobile Telecommunications 2000) system.

### Description of the Prior Art

In the IMT-2000 system, both user equipment compliant with Release5, which enables high-speed packet communication in the HSDPA (High Speed Downlink Packet Access) scheme,anduser equipment compliant with Re lease 9 9, which is not compliant with high-speed packet communication in the HSDPA scheme,may be mixed. Other cases in which plural mobile communication schemes are used can also be considered (for example, see National Publication of International Patent Application No. 2004-533148).

Here, the HSDPA scheme is a scheme for realizing downlink high-speed packet transmission at 8 Mbps, using a channel called HS-DSCH (High-Speed Downlink Shared Channel) as a downlink transport channel.

US 2003/014371 A1 (Samsung) discloses an apparatus and method for transmitting/receiving serving HS-SCCH set information in an HSDPA communication system. Each user equipment monitors a particular control channel set among a plurality of control channel sets of the system. A Node B can modify a control channel set assigned to particular user equipment, and notify the modification to the particular user equipment.

### BRIEF SUMMARY OF THE INVENTION

In the above-mentioned conventional systems, high-speed packet transmission can be realized in the HSDPA scheme; however, it requires wireless resources greater than the dedicated transportation channel used in a voice call. In a situation where plural voice calls have been established in the same cell, a problem may occur in that packet transmission cannot be realized in the HSDPA scheme due of lack of wireless resources.

In other words, in the conventional mobile communication systems, since the HSDPA scheme and a voice call are mixed in the same cell in the above-mentioned environment, a problem occurs in that the HSDPA scheme, which requires greater wireless resources than in a voice call, cannot be established due to lack of wireless resources. As the above Patent Document only describes cell selection, the technique described there cannot solve the problem.

The object of the preferred embodiments of the present invention is to solve the above-mentioned problem by providing a mobile communication system, radio network controller, and user-equipment differentiating method and program which enable wireless resources to be effectively used in an environment where the HSDPA scheme and a voice call are mixed in the same cell.

In one aspect of the subject invention, there is provided a radio network controller "RNC" that includes a determination means for: (i) examining a Radio Resource Control connection request from user equipment "UE" received via a base station that includes a first cell compliant with High-Speed Downlink Packet Access "HSDPA", and a HSDPA-non-supporting second cell which is provided in different frequencies of the same sector as that of the first cell and which does not support HSDPA, and (ii) determining whether the user equipment is compliant with HSDPA. The RNC also includes a means for establishing HSDPA in the first cell when the user equipment is determined to be compliant with HSDPA. The determination means determines the user equipment is available for HSDPA if: the current cell of the user equipment is the HSDPA-non-supporting cell; an adjacent cell is a cell compliant with the HSDPA in different frequencies; "Access Stratum Release Indicator" in the RRC connection request is set for REL-5; and, a value of "Establishment Cause" in the RRC connection request is any of: "Originating Interactive call"; "Originating Background Call", "Terminating Interactive Call", and "Terminating Background Call".

The user equipment may set high a value of Hierarchical Cell Structure Priority "HCS_PRIO" in the second cell. A central processing unit "CPU" may perform the functions of the determination means and the establishing means.

In a second aspect of the subject invention, there is provided a mobile communication system that includes: the RNC described above, and the base station via which the RNC receives the connection request from the UE.

In a third aspect of the subject invention, there is provided a user-equipment differentiating method performed by a radio network controller "RNC". The method includes steps of: (i) examining a Radio Resource Control connection request from user equipment received via a base station, the base station including a first cell compliant with High-Speed Downlink Packet Access "HSDPA", and a second HSDPA-non-supporting cell which is provided in different frequencies of the same sector as that of the first cell and which does not support HSDPA, (ii) determining whether the user equipment is compliant with HSDPA; and, (iii) establishing HSDPA in the first cell when the user equipment is determined to be compliant with HSDPA. The step of determining whether the user equipment is compliant with HSDPA determines the user equipment to be available for HSDPA if: the current cell of the user equipment is the HSDPA-non-supporting cell; an adjacent cell is a cell compliant with the HSDPA in different frequencies; "Access Stratum Release Indicator" in the RRC connection request is set for REL-5; and, a value of "Establishment Cause" in the RRC connection request is any of: "Originating Interactive Call", "Originating Background Call", "Terminating Interactive Call", and "Terminating Background Call".

In a fourth aspect of the subject invention, there is provided a program for causing a computer of a radio network controller to perform the steps of the method.

In a fifth aspect of the subject invention, there is provided user equipment "UE" in a mobile communication system. The UE includes a central processing unit "CPU" for determining cells to which is sent by the UE a Radio Resource Control connection request in which: "Access Stratum Release Indicator" is set for REL-5; and, a value of "Establishment Cause" is any of: "Originating Interactive Call", "Originating Background Call", "Terminating Interactive Call", and "Terminating Background Call". The determination of cells by the UE CPU is based on a value of Hierarchical Cell Structure Priority "HCS_PRIO" set in a system information block for: first cells that are provided at base stations and are compliant with High-Speed Downlink Packet Access "HSDPA"; and, HSDPA-non-supporting second cells that are provided at the base stations, each second cell being provided in different frequencies of the same sector as that of a respective first cell or cells at a base station and not supporting HSDPA.

That is to say, the mobile communication system of the present invention is characterized by enabling wireless resources to be effectively used in an environment where user equipment (UE) compliant with Release5, which enables high-speed packet communication in the HSDPA (High Speed Downlink Packet Access) scheme and user equipment compliant with Release99, which is not compliant with high-speed packet communication in the HSDPA scheme are mixed in the IMT-2000 (International Mobile Telecommunications 2000) system.

The mobile communication system of the present invention realizes a method for establishing the HSDPA (High Speed Downlink Packet Access) calls by differentiating the user equipment compliant with Release5 and the user equipment compliant with Release99 in the radio network controller (RNC).

That is to say, the mobile communication system of the present invention sets high the HCS_PRIO IE (Hierarchical Cell Structure Priority Information Element) of a cell which does not support the HSDPA in an environment where the cell which does not support the HSDPA is provided in different frequencies of the same sector as that of a cell compliant with the HSDPA. That enables user equipment to send an RRC (Radio Resource Control) connection request to the cell which does not support the HSDPA.

When the radio network controller receives the RRC connection request, it determines whether the user equipment is compliant with the HSDPA or not. If the user equipment is compliant with the HSDPA, the radio network controller establishes the HSDPA in a cell compliant with the HSDPA in different frequencies. That enables allocation of wireless resources for cells compliant with the HSDPA to the user equipment compliant with Release99 (user equipment which is not compliant with the HSDPA) to be reduced and the wireless resources to be effectively used. Therefore, the radio network controller can differentiate the user equipment compliant with Releases and the user equipment compliant with Release99 and increase the number of established HSDPAs in the cells compliant with the HSDPA.

The present invention is advantageous in that it can differentiate the user equipment compliant with Release5 and the user equipment compliant with Release99 and effectively use wireless resources with a configuration and operation described later.

### BRIEF DESCRIPTION OF THE DRAWINGS

FIG. 1 is a block diagram showing a configuration of a mobile communication system according to an embodiment of the present invention;
FIG. 2 is a block diagram showing a configuration of the radio network controller of FIG. 1;
FIG. 3 is a block diagram showing a configuration of the user equipment of FIG. 1;
FIG. 4 is a diagram showing an exemplary format of an RRC connection request used in an embodiment of the present invention;
FIG. 5 is a flowchart showing a parameter setting process by the user equipment of FIG. 1; and
FIG. 6 is a flowchart showing a user equipment differentiating process by the radio network controller of FIG. 1.

### DETAILED DESCRIPTION OF THE PREFERRED EMBODIMENTS

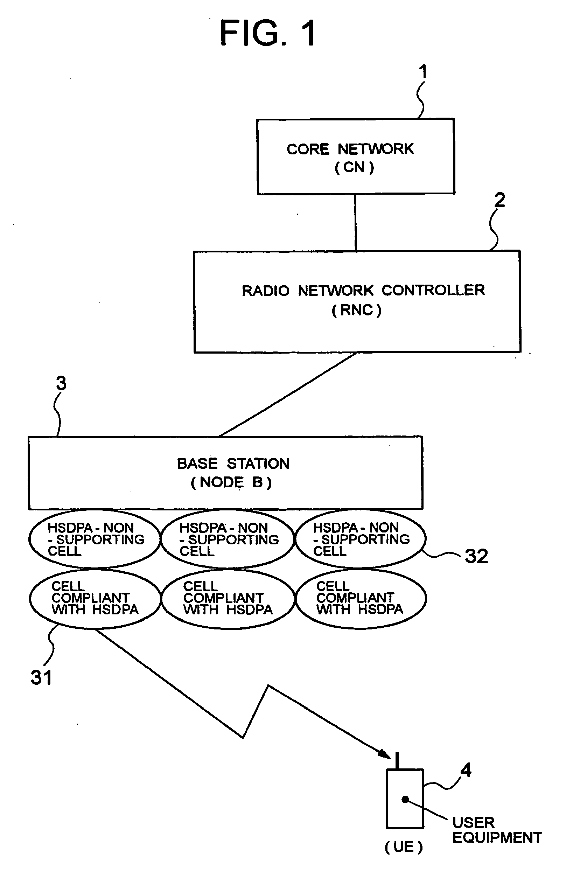

Now, embodiments of the present invention will be described with reference to drawings. FIG. 1 is a block diagram showing a configuration of a mobile communication system according to an embodiment of the present invention. In FIG. 1, the mobile communication system according to an embodiment of the present invention includes a core network (CN) 1 for switching mobile switched networks (not shown), a base station (node-B) 3, a radio network controller (RNC) 2 for controlling the base station 3, and user equipment (UE) 4.

In the base station 3, a cell compliant with the HSDPA (High Speed Downlink Packet Access) 31 which is compliant with the HSDPA, and an HSDPA-non-supporting cell 32 which does not support the HSDPA and which is provided in different frequencies of the same sector as that of the cell compliant with the HSDPA 31 are arranged.

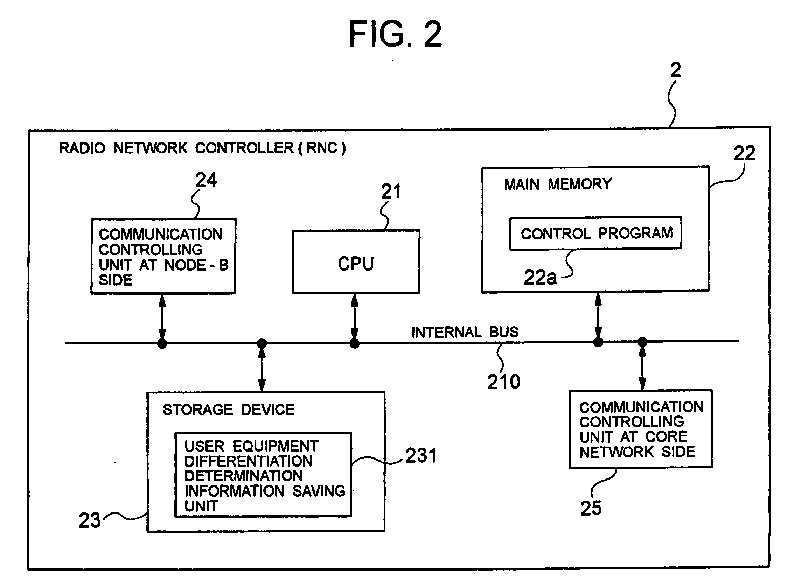

FIG. 2 is a block diagram showing a configuration of the radio network controller 2. In FIG. 2, the radio network controller 2 includes a CPU (central processing unit) 21 for controlling each part of the controller, main memory 22 for storing a control program 22a executed by the CPU 21, a storage device 23 having a user equipment differentiation determination information saving unit 231 for storing user equipment differentiation determination information, a communication controlling unit at the base station side 24 for controlling communication with the side of the base station 3, and a communication controlling unit at the core network side 25 for controlling communication with the side of the core network 1. In the radio network controller 2, the CPU 21, the main memory 22, the storage device 23, the communication controlling unit at the base station side 24 and the communication controlling unit at the core network side 25 are connected with each other via an internal bus 210.

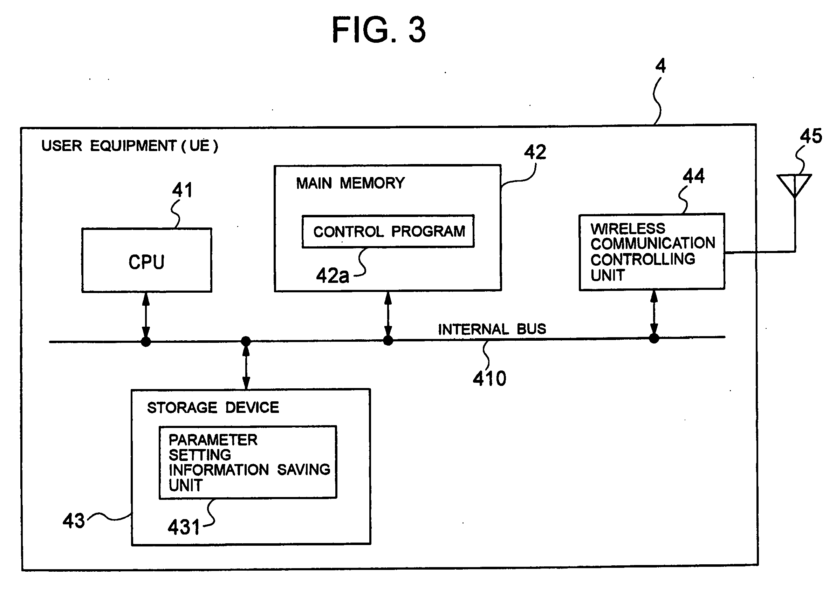

FIG. 3 is a block diagram showing a configuration of the user equipment 4 of FIG. 1. In FIG. 3, the user equipment 4 includes a CPU (central processing unit) 41 for controlling each part of the controller, main memory 42 for storing a control program 42a executed by the CPU 41, a storage device 43 having a parameter setting information saving unit 431 for storing parameter setting information, and a wireless communication controlling unit 44 for controlling wireless communication with the base station 3. In the user equipment 4, the CPU 41, the main memory 42, the storage device 43 and the wireless communication controlling unit 44 are connected with each other via an internal bus 410.

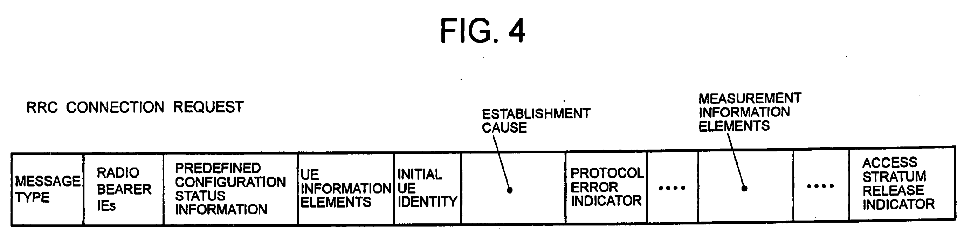

FIG. 4 is a diagram showing an exemplary format of an RRC (Radio Resource Control) connection request used in an embodiment of the present invention. In FIG. 4, the RRC connection request includes "message Type" , "Radio Bearer IEs", "Predefined Configuration Status information", "UE information elements", "Initial UE identity", "Establishment cause", "Protocol error indicator", "Measurement information elements", and "Access stratum release indicator".

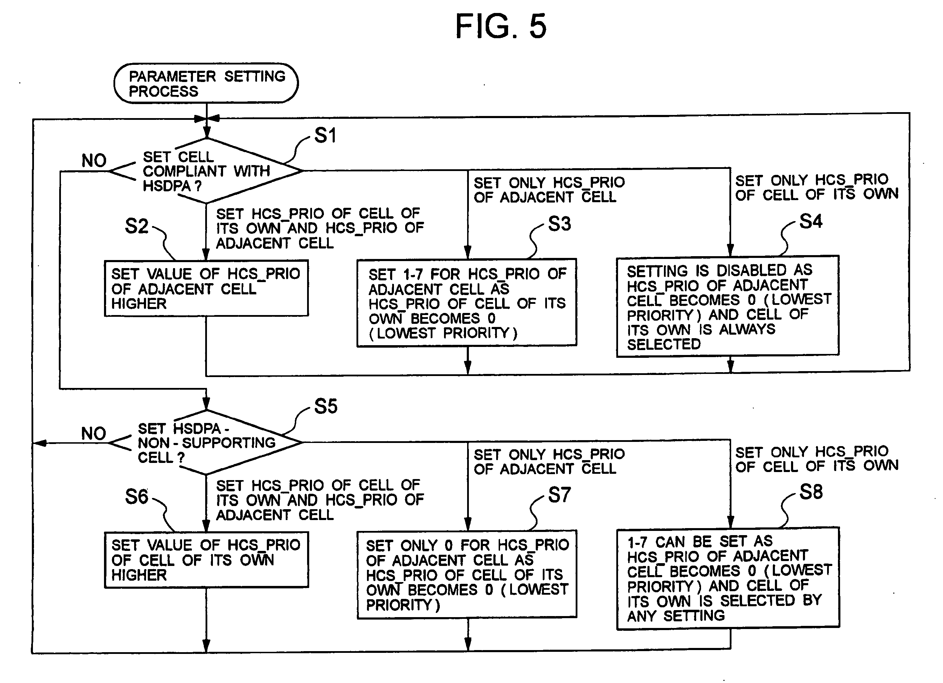

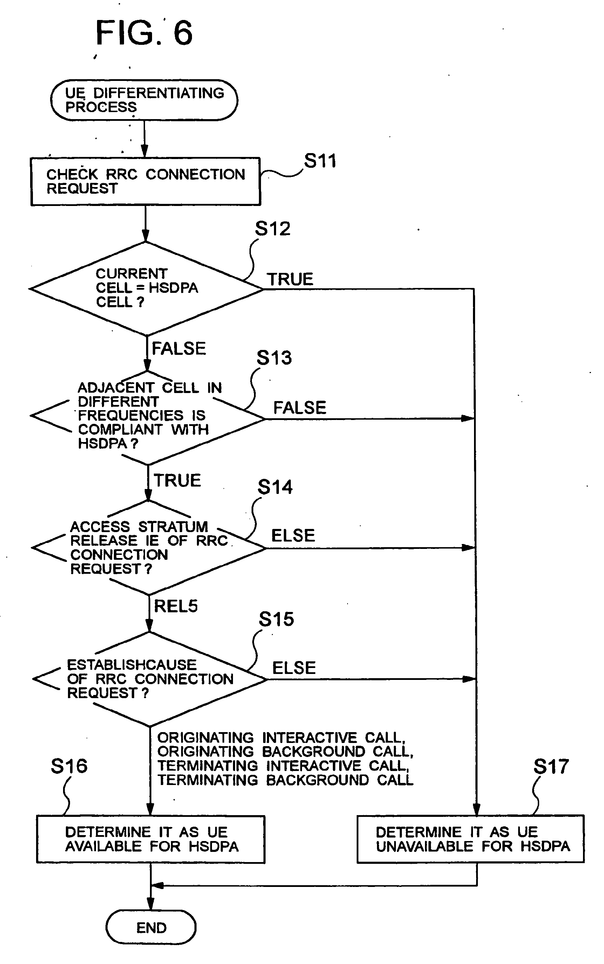

FIG. 5 is a flowchart showing a parameter setting process by the user equipment 4 of FIG. 1. FIG. 6 is a flowchart showing a user equipment differentiating process by the radio network controller 2 of FIG. 1. Operation of a mobile communication system according to an embodiment of the present invention will be described with reference to FIGS. 1-6. The process shown in FIG. 5 is realized by the CPU 41 of the user equipment 4 to execute a control program 42a. The differentiating process between user equipment compliant with Release5, which enables high-speed packet communication in the HSDPA scheme,and userequipment compliant with Release99,which is not compliant with high-speed packet communication in the HSDPA scheme, shown in FIG. 6 is realized by the CPU 21 of the radio network controller 2 to execute a control program 22a.

In the embodiment, arrangement of cells and setting of parameters will be described at first. In the embodiment, the cell compliant with the HSDPA 31 and the HSDPA-non-supporting cell 32 of different frequencies are arranged in the same sector under the base station 3. As the user equipment 4 determines the cells to which an RRC connection request is sent, based on a value of HCS_PRIO (Hierarchical Cell Structure_Priority) set in a system information block (SIB) of these cells, parameters are set as below.

Here, the range of HCS_PRIO is "0-7", in which a default is "0" and the bigger number has the higher priority. That is described in "User Equipment (UE) procedures in idle mode and procedures for cell reselection in connected mode, 5.2.6 Cell Reselection Evaluation Process" (3GPP TS25.304 V6.4.0 (2004-12)).

When the user equipment 4 sets HCS_PRIO of the cell of its own and HCS_PRIO of the adjacent cell in setting the cell compliant with the HSDPA 31 (step S1 of FIG. 5), it sets the value of HCS_PRIO of the adjacent cell higher (step S2 of FIG. 5).

When the user equipment 4 sets only HCS_PRIO of the adjacent cell in setting the cell compliant with the HSDPA (step S1 of FIG. 5), it sets "1-7" for HCS_PRIO of the adjacent cell (step S3 of FIG. 5) as HCS_PRIO of the cell of its own becomes "0 (the lowest priority)".

When the user equipment 4 sets only HCS_PRIO of the cell of its own in setting the cell compliant with the HSDPA (step S1 of FIG. 5), the setting is disabled as HCS_PRIO of the adjacent cell becomes "0 (the lowest priority)" and the cell of its own is always selected (step S4 of FIG. 5).

When the user equipment 4 sets HCS_PRIO of the cell of its own and HCS_PRIO of the adjacent cell (step S5 of FIG. 5) in setting the HSDPA-non-supporting cell 32 (step S1 of FIG. 5), it sets the value of HCS_PRIO of the cell of its own higher (step S6 of FIG. 5).

When the user equipment 4 sets only HCS_PRIO of the adjacent cell (step S5 of FIG. 5), it can only set "0" for HCS_PRIO of the adjacent cell (step S7 of FIG. 5) as HCS_PRIO of the cell of its own becomes "0 (the lowest priority)".

When the user equipment 4 sets only HCS_PRIO of the cell of its own (step S5 of FIG. 5), it can set "0-7" (step S8 of FIG. 5) as HCS_PRIO of the adjacent cell becomes "0 (the lowest priority)" and the cell of its own is selected by any setting. The parameters above are stored in the parameter setting information saving unit 431 of the user equipment 4.

Now, differentiation between user equipment compliant with Release5 and user equipment compliant with Release99 when the radio network controller 2 receives an RRC connection request will be described.

The radio network controller 2 checks the received RRC connection request based on information in a user equipment differentiation determination information saving unit 231 (step S11 of FIG. 6), and determines that user equipment which satisfies the conditions below as user equipment which is available for the HSDPA (step S12 of FIG. 6). If the cell of its own is the HSDPA-non-supporting cell 32 (step S12 of FIG. 6) and if the cell compliant with the HSDPA 31 is in the adjacent cell of different frequencies (step S13 of FIG. 6), the radio network controller 2 establishes the HSDPA in the cell compliant with the HSDPA 31.

The above conditions include that "Access stratum release indicator" in the RRC connection request is set for REL-5 (Release5) (step S14 of FIG. 6) and that a value of "Establishment cause" in the RRC connection request is any of "Originating Interactive Call", "Originating Background Call", "Terminating Interactive Call", and "Terminating Background Call" (step S15 of FIG. 6).

As such, the embodiment can effectively use wireless resources in an environment where the HSDPA scheme and a voice call and the like are mixed in the same cell by differentiating user equipment compliant with Release5 and user equipment compliant with Release99 with the radio network controller 2.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

A mobile communication system enables wireless resources to be effectively used in an environment where the High-Speed Downlink Packet Access (HSDPA) scheme and an audio call are mixed in the same cell. Under the control of a base station, a cell compliant with HSDPA and a HSDPA-non-supporting cell having different frequencies are arranged in the same sector. User equipment (UE) sets the value of HCS_PRIO of the HSDPA-non-supporting cell at a higher priority, and sends a RRC Connection Request to the HSDPA-non-supporting cell. When the Radio Network Controller (RNC) receives the RRC Connection Request, it determines whether the UE is compliant with HSDPA. If the UE is compliant with HSDPA, the RNC establishes HSDPA in a cell compliant with HSDPA in different frequencies.

## Claims

1. A radio network controller (2) **characterized by** comprising:
a determination means for:
examining a Radio Resource Control "RRC" connection request from user equipment (4) received via a base station (3), the base station comprising:
a first cell (31) compliant with High-Speed Downlink Packet Access "HSDPA"; and,
a HSDPA-non-supporting second cell (32) which is provided in different frequencies of the same sector as that of the first cell and which does not support HSDPA; and,
determining whether the user equipment (4) is compliant with HSDPA; and,
a means for establishing HSDPA in said first cell (31) when the user equipment (4) is determined to be compliant with HSDPA;
wherein said determination means determines said user equipment (4) is available for HSDPA if:
the current cell of said user equipment (4) is said HSDPA-non-supporting cell (32);
an adjacent cell is a cell (31) compliant with the HSDPA in different frequencies;
"Access Stratum Release Indicator" in said RRC connection request is set for REL-5; and,
a value of "Establishment Cause" in said RRC connection request is any of: "Originating Interactive Call", "Originating Background Call", "Terminating Interactive Call", and "Terminating Background Call".

2. The radio network controller (2) according to claim 1, wherein said user equipment (4) sets high a value of Hierarchical Cell Structure Priority "HCS_PRIO" in said second cell (32).

3. The radio network controller (3) of claim 1 or 2, wherein a central processing unit "CPU" performs the functions of the determination means and the establishing means.

4. A mobile communication system comprising:
the radio network controller (2) of any of claims 1 to 3; and,
the base station (3) via which the radio network controller (2) receives the RRC connection request from the user equipment (4).

5. A user-equipment differentiating method performed by a radio network controller (2), the method being
**characterized by** comprising steps of:
examining a Radio Resource Control "RRC" connection request from user equipment (4) received via a base station (3), the base station comprising:
a first cell (31) compliant with High-Speed Downlink Packet Access "HSDPA"; and,
a second HSDPA-non-supporting cell (32) which is provided in different frequencies of the same sector as that of said first cell (31) and which does not support HSDPA;
determining whether the user equipment (4) is compliant with HSDPA; and,
establishing HSDPA in said first cell (31) when the user equipment (4) is determined to be compliant with HSDPA;
wherein said step of determining whether the user equipment is compliant with HSDPA determines said user equipment to be available for HSDPA if:
the current cell of said user equipment (4) is said HSDPA-non-supporting cell (32);
an adjacent cell is a cell (31) compliant with the HSDPA in different frequencies;
"Access Stratum Release Indicator" in said RRC connection request is set for REL-5; and,
a value of "Establishment Cause" in said RRC connection request is any of: "Originating Interactive Call", "Originating Background Call", "Terminating Interactive Call", and "Terminating Background Call".

6. The user-equipment differentiating method according to claim 5, wherein said user equipment (4) performs a step of setting high a value of Hierarchical Cell Structure Priority "HCS_PRIO" in said second cell (32).

7. A program including executable instructions which when executed by a computer of a radio network controller (2) causes the computer (2) to perform the steps of claim 5 or 6.

8. User equipment "UE" (4) in a mobile communication system, the UE (4) being **characterized by** comprising a central processing unit "CPU" for determining cells to which is sent by the UE a Radio Resource Control "RRC" connection request in which:
"Access Stratum Release Indicator" is set for REL-5; and,
a value of "Establishment Cause" is any of: "Originating Interactive Call", "Originating Background Call", "Terminating Interactive Call", and "Terminating Background Call";
the determination of cells by the user-equipment CPU being based on a value of Hierarchical Cell Structure Priority "HCS_PRIO" set in a system information block for:
first cells that are provided at base stations and are compliant with High-Speed Downlink Packet Access "HSDPA"; and,
HSDPA-non-supporting second cells that are provided at the base stations, each second cell being provided in different frequencies of the same sector as that of a respective first cell or cells at a base station and not supporting HSDPA.

## Patentansprüche

1. Funknetzcontroller (2), **dadurch gekennzeichnet, dass** er aufweist,
Feststellungsmittel für:
Untersuchen einer Funkressourcensteuerungs- "RRC" (Radio Resource Control) -Verbindungsanforderung von Benutzerausrüstung (4), die über eine Basisstation (3) empfangen wird, wobei die Basisstation aufweist:
eine erste Zelle (31), die mit Hochgeschwindigkeits-Abwärtsverbindungspaketzugang "HSDPA" (High Speed Downlink Packet Access) konform ist; und
eine HSDPA nicht unterstützende zweite Zelle (32), die in unterschiedlichen Frequenzen desselben Sektors als diejenigen der ersten Zelle vorgesehen ist und die HSDPA nicht unterstützt; und
bestimmen, ob die Benutzerausrüstung (4) mit HSDPA konform ist; und
Mittel zum Einrichten von HSDPA in der ersten Zelle (31), wenn festgestellt worden ist, dass die Benutzerausrüstung (4) mit HSDPA konform ist;
wobei die Feststellungsmittel feststellen, dass die Benutzerausrüstung (4) für HSDPA zur Verfügung steht, wenn:
die gegenwärtige Zelle der Benutzerausrüstung (4) die HSDPA nicht unterstützende Zelle (32) ist;
eine benachbarte Zelle eine Zelle (31) ist, die mit HSDPA in unterschiedlichen Frequenzen konform ist;
"Access Stratum Release Indicator" (Zugangsschichtfreigabeanzeiger) in der RRC-Verbindungsanforderung für REL-5 eingestellt ist; und
ein Wert von "Establishment Cause" (Einrichtungsursache) in der RRC-Verbindungsanforderung einer ist von "Originating Interactive Call" (abgehender interaktiver Anruf), "Originating Background Call" (abgehender Hintergrundanruf), "Terminating Interactive Call" (endender interaktiver Anruf) und "Terminating Background Call" (endender Hintergrundanruf).

2. Funknetzcontroller (2) nach Anspruch 1, bei dem die Benutzerausrüstung (4) einen hohen Wert der hierarchischen Zellstrukturpriorität "HCS_PRIO" in der zweiten Zelle (32) setzt.

3. Funknetzcontroller (2) nach Anspruch 1 oder 2, in dem eine zentrale Verarbeitungseinheit "CPU" die Funktion der Feststellungsmittel und der Einrichtungsmittel durchführt.

4. Mobiles Kommunikationssystem, das aufweist:
den Funknetzcontroller (2) von irgendeinem der Ansprüche 1 bis 3; und
die Basisstation (3), über die der Funknetzcontroller (2) die REC-Verbindungsanforderung von der Benutzerausrüstung (4) empfängt.

5. Benutzerausrüstungsunterscheidungsverfahren, das durch einen Funknetzcontroller (2) durchgeführt wird, welches Verfahren **dadurch gekennzeichnet ist, dass** es die Schritte aufweist:
eine Funkressourcensteuer- "REC" (Radio Resource Control) - Verbindungsanforderung von Benutzerausrüstung (4) zu untersuchen, die über eine Basisstation (3) empfangen worden ist, welche Basisstation aufweist:
eine erste Zelle (31), die mit Hochgeschwindigkeitsabwärtsverbindungspaketzugang "HSDPA" (High Speed Downlink Packet Access) konform ist; und
eine zweite HSDPA nicht unterstützende Zelle (32), die in unterschiedlichen Frequenzen desselben Sektors als denjenigen der ersten Zelle (31) vorgesehen ist und die HSDPA nicht unterstützt;
feststellen, ob die Benutzerausrüstung (4) mit HSDPA konform ist; und
HSDPA in der ersten Zelle (31) einzurichten, wenn festgestellt wird, dass die Benutzerausrüstung (4) mit HSDPA konform ist;
wobei der Schritt, festzustellen, ob die Benutzerausrüstung mit HSDPA konform ist, feststellt, dass die Benutzerausrüstung für HSDPA zur Verfügung steht, wenn:
die gegenwärtige Zelle der Benutzerausrüstung (4) die HSDPA nicht unterstützende Zelle (32) ist;
eine benachbarte Zelle eine Zelle (31) ist, die mit dem HSDPA in unterschiedlichen Frequenzen konform ist;
"Access Stratum Release Indicator" (Zugangsschichtfreigabeindikator) in der RRC-Verbindungsanforderungen für REL-5 gesetzt ist; und
ein Wert von "Establishment Cause" (Einrichtungsursache) in der RRC-Verbindungsanforderung irgendeiner ist von: "Originating Interactive Call" (abgehender interaktiver Anruf), "Originating Background Call" (abgehender Hintergrundanruf), "Terminating Interactive Call" (endender interaktiver Anruf) und "Terminating Background Call" (endender Hintergrundanruf).

6. Benutzerausrüstung unterscheidendes Verfahren gemäß Anspruch 5, bei dem die Benutzerausrüstung (4) einen Schritt ausführt, einen Wert der hierarchischen Zellenstrukturpriorität "HCS_PRIO" in der zweiten Zelle (32) hoch zu setzen.

7. Programm, das ausführbare Anweisungen einschließt, die, wenn sie durch einen Computer eines Funknetzcontrollers (2) ausgeführt werden, bewirken, dass der Computer (2) die Schritte der Ansprüche 5 oder 6 durchführt.

8. Benutzerausrüstung "UE" (4) in einem mobilen Kommunikationssystem, wobei die UE (4) **dadurch gekennzeichnet ist, dass** sie eine zentrale Verarbeitungseinheit "CPU" aufweist, um Zellen festzustellen, zu denen durch die UE eine Funkressourcensteuer-"RRC" (Radio Resource Control) -Verbindungsanforderung gesandt wird, in der:
"Access Stratum Release Indicator" (Zugangssichtfreigabeindikator) für REL-5 gesetzt ist; und
ein Wert von "Establishment Cause" (Einrichtungsursache) einer ist von "Originating Interactive Call" (abgehender interaktiver Anruf), "Originating Background Call" (abgehender Hintergrundanruf), "Terminating Interactive Call" (endender interaktiver Anruf) und "Terminating Background Call" (endender Hintergrundanruf);
wobei die Feststellung von Zellen durch die Benutzerausrüstung CPU auf einem Wert der hierarchischen Zellenstrukturpriorität "HCS-PRIO" beruht, der in einem Systemblock eingestellt ist für:
erste Zellen, die bei Basisstationen vorgesehen sind und mit Hochgeschwindigkeitsabwärtsverbindungspaketzugang "HSDPA" (High Speed Downlink Packet Access) konform sind; und
HSDPA nicht unterstützende zweite Zellen, die an den Basisstationen vorgesehen sind, wobei jede zweite Zelle in unterschiedlichen Frequenzen desselben Sektors als diejenigen einer ersten Zelle oder Zellen an einer Basisstation vorgesehen sind, und die HSDPA nicht unterstützen.

## Revendications

1. Contrôleur de réseau de radiocommunication (2)
**caractérisé par le fait qu'**il comprend :
un moyen de détermination pour :
examiner une requête de connexion de contrôle de ressources radio « RRC » provenant d'un équipement utilisateur (4) reçue par l'intermédiaire d'une station de base (3), la station de base comprenant :
une première cellule (31) conforme à un accès par paquets en liaison descendante haut débit « HSDPA » ; et
une seconde cellule ne supportant pas le HSDPA (32) qui est fournie en fréquences du même secteur différentes de celle de la première cellule et qui ne supporte pas le HSDPA ; et
déterminer si l'équipement utilisateur (4) est conforme au HSDPA ou non ; et,
un moyen pour établir un HSDPA dans ladite première cellule (31) lorsque l'équipement utilisateur (4) est déterminé pour être conforme au HSDPA ;
dans lequel ledit moyen de détermination détermine que ledit équipement utilisateur (4) est disponible pour le HSDPA si :
la cellule actuelle dudit équipement utilisateur (4) est ladite cellule ne supportant pas le HSDPA (32)
une cellule adjacente est une cellule (31) conforme au HSDPA dans différentes fréquences ;
« l'indicateur de libération de niveau d'accès » dans ladite requête de connexion de RRC est réglé pour REL-5 ; et
une valeur de « cause d'établissement » dans ladite requête de connexion de RRC est l'une quelconque de : « émission d'appel interactif », « émission d'appel de référence », « fin d'appel interactif » et « fin d'appel de référence ».

2. Contrôleur de réseau de radiocommunication (2) selon la revendication 1, dans lequel ledit équipement utilisateur (4) fixe à un niveau élevé une valeur de priorité de structure de cellule hiérarchique « HCS_PRIO » dans ladite seconde cellule (32).

3. Contrôleur de réseau de radiocommunication (3) selon la revendication 1 ou 2, dans lequel une unité centrale « CU » effectue les fonctions du moyen de détermination et du moyen d'établissement.

4. Système de communication mobile comprenant :
le contrôleur de réseau de radiocommunication (2) selon l'une quelconque des revendications 1 à 3 ; et
la station de base (3) par l'intermédiaire de laquelle le contrôleur de réseau de radiocommunication (2) reçoit la requête de connexion de RRC de l'équipement utilisateur (4).

5. Procédé de différenciation d'équipement utilisateur effectué par un contrôleur de réseau de radiocommunication (2), le procédé étant **caractérisé par le fait qu'**il comprend les étapes consistant à :
examiner une requête de connexion de contrôle de ressources radio « RRC » provenant de l'équipement utilisateur (4) reçue par l'intermédiaire d'une station de base (3), la station de base comprenant :
une première cellule (31) conforme à un accès par paquets en liaison descendante haut débit « HSDPA » ; et
une seconde cellule ne supportant pas le HSDPA (32) qui est fournie en fréquences du même secteur différentes de celle de la première cellule (31) et qui ne supporte pas le HSDPA ; et
déterminer si l'équipement utilisateur (4) est conforme au HSDPA ou non ; et,
établir le HSDPA dans ladite première cellule (31) lorsque l'équipement utilisateur (4) est déterminé pour être conforme au HSDPA ;
dans lequel ladite étape consistant à déterminer si l'équipement utilisateur est conforme au HSDPA ou non détermine que ledit équipement utilisateur est disponible pour le HSDPA si :
la cellule actuelle dudit équipement utilisateur (4) est ladite cellule ne supportant pas le HSDPA (32)
une cellule adjacente est une cellule (31) conforme au HSDPA dans différentes fréquences ;
« l'indicateur de libération de niveau d'accès » dans ladite requête de connexion de RRC est fixé pour REL-5 ; et
une valeur de « cause d'établissement » dans ladite requête de connexion de RRC est l'une quelconque de : « émission d'appel interactif », « émission d'appel de référence », « fin d'appel interactif » et « fin d'appel de référence ».

6. Procédé de différenciation d'équipement utilisateur selon la revendication 5, dans lequel ledit équipement utilisateur (4) effectue une étape consistant à fixer à un niveau élevé une valeur de priorité de structure de cellule hiérarchique « HCS_PRIO » dans ladite seconde cellule (32)

7. Programme comprenant des instructions exécutables qui, lorsqu'elles sont exécutées par un ordinateur d'un contrôleur de réseau de radiocommunication (2) amènent l'ordinateur (2) à réaliser les étapes de la revendication 5 ou 6.

8. Equipement utilisateur « UE » (4) dans un système de communication mobile, le UE (4) étant **caractérisé par le fait qu'**il comprend une unité centrale « UC » pour déterminer les cellules auxquelles est envoyée par le UE une requête de connexion de contrôle de ressources radio « RRC » dans laquelle :
« l'indicateur de libération de niveau d'accès » est fixé pour REL-5 ; et
une valeur de « cause d'établissement » est l'une quelconque de : « émission d'appel interactif », « émission d'appel de référence », « fin d'appel interactif » et « fin d'appel de référence » ;
la détermination de cellules par la UC d'équipement utilisateur étant basée sur une valeur de priorité de structure de cellule hiérarchique « HCS_PRIO » fixée dans un bloc d'informations système pour :
des premières cellules qui sont fournies au niveau de stations de base et qui sont conformes à l'accès par paquets en liaison descendante haut débit « HSDPA » ; et,
des secondes cellules ne supportant pas le HSDPA qui sont fournies au niveau de stations de base, chaque seconde cellule étant fournie en fréquences du même secteur différentes de celles d'une première cellule ou de premières cellules respectives au niveau d'une station de base et ne supportant pas le HSDPA.
